(19) Europäisches Patentamt
European Patent Office
Office européen des brevets

(11) Veröffentlichungsnummer: **0 088 904**
**B1**

(12) **EUROPÄISCHE PATENTSCHRIFT**

(45) Veröffentlichungstag der Patentschrift: **23.07.86**

(51) Int. Cl.⁴: **C 10 M 157/00,** C 08 J 3/08, C 08 F 2/08

(21) Anmeldenummer: **83101529.2**

(22) Anmeldetag: **18.02.83**

(54) **Konzentrierte Emulsionen von Olefincopolymerisaten.**

(30) Priorität: **01.03.82 DE 3207291**

(43) Veröffentlichungstag der Anmeldung: **21.09.83 Patentblatt 83/38**

(45) Bekanntmachung des Hinweises auf die Patenterteilung: **23.07.86 Patentblatt 86/30**

(84) Benannte Vertragsstaaten: **BE FR GB IT NL**

(56) Entgegenhaltungen:
**EP-A-0 014 746**
**FR-A-2 126 747**
**FR-A-2 185 656**
**GB-A-1 231 614**

(73) Patentinhaber: **Röhm GmbH, Kirschenallee Postfach 4242, D-6100 Darmstadt 1 (DE)**

(72) Erfinder: **Pennewiss, Horst, Dr., Meissnerweg 53, D-6100 Darmstadt- Neu- Kranichstein (DE)**
Erfinder: **Schweder, Roland, Bartningstrasse 20, D-6100 Darmstadt- Kranichstein (DE)**
Erfinder: **Tschepat, Wolfgang, Auf der Hardt 65, D-6100 Darmstadt (DE)**

**EP 0 088 904 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

### Gebiet der Erfindung

Die Erfindung betrifft konzentrierte Emulsionen von Olefincopolymerisaten in einem Olefincopolymerisate nicht lösenden Trägermedium zur Verwendung als Schmieröladditive insbesondere zusammen mit Acrylharzen.

Die beiden Polymerisatklassen, nämlich Öllösliche Olefincopolymerisate (OCP), insbesondere Äthylen-Propylen-Copolymerisate, und Öllösliche Polymere auf Basis von Polyalkyl(meth)acrylaten (PAMA) finden ausgedehnte Verwendung als Schmieröladditive, da sie das Viskositäts-Temperatur-Verhalten von Mehrbereichsmineralölen verbessern (VI-Verbesserer). Neben der Verdickungswirkung wird von VI-Verbesserern genügende Scherstabilität erwartet. Weiter gehören eine gute Dispergier- bzw. Detergenzwirkung gegenüber Kaltschlamm und sich absetzenden Schmutz in den Motoren zu den erwünschten Eigenschaften von VI-Verbesserern. Beide Produktklassen weisen Vorzüge und Nachteile auf. Die Polyolefine besitzen eine ausgezeichnete Verdickungswirkung, jedoch keine nennenswerte stockpunktserniedrigende Wirkung, so daß Stockpunktverbesserer zugesetzt werden müssen. Polyalkylmethacrylatezusatz verleint den Mineralölen ein gutes Viskositätstemperaturverhalten und - bei genügend hoher Konzentration - eine hervorragende Verschließschutzwirkung. Hervorzuheben ist auch ihre stockpunkterniedrigende Wirkung.

Einer Kombination der beiden Polymerisattypen für den gleichzeitigen Einsatz in Mineralölen steht ihre Unverträglichkeit im Wege: Von der Technik werden Schmieröladditive in flüssiger Form (Mineralölbasis) gefordert, die einen möglichst hohen Polymerisatgehalt aufweisen. Die beiden Polymerisattypen sind jedoch nur solange ohne Schwierigkeiten zusammen in Mineralöl löslich, als der eine Polymerisattyp mengenmäßig absolut deminiert. (Anteil des anderen Polymerisattyps höchstens ca. 5 Gew.-%, bezogen auf den Gesamtpolymerisatgehalt). Beim Überschreiten dieser Grenze kommt es zur Phasentrennung der Polymerisate, die bei hinreichend langer Lagerung zu Schichtenbildung führen karn.

### Stand der Technik

In der DE-A 29 05 954 werden konzentrierte Polymerisatemulsionen aus zur VI-Verbesserung geeigneten Poly(meth)acrylaten (PAMA) und Olefincopolymerisaten (OCP) in Mineralöl gelehrt, wobei die Emulsion als kontinuierliche Phase Polyacrylate bzw. -methacrylate mit einem definierten, niedrigen Molgewichtsbereich, als disperse Phase ein OCP mit einem hinsichtlich der Verdickungswirkung komplementären Molgewicht, ein Trägermedium das gegenüber PAMA als gutes Lösungsmittel und - aufgrund des darin gelösten PAMA - gegenüber dem OCP als wesentlich weniger gutes Lösungsmittel wirkt und als stabilisierendes Mittel für die Phasenverteilung ein Pfropf- und/oder ein Blockpolymerisat aus Olefincopolymerisaten und Acryl- und/oder Methacrylsäureestern enthält. Das höchste gemäß der DE-A zu erzielende Verhältnis OCP zu PAMA beträgt 60: 40 (Unteranspruch 4). Im Trägermedium können noch Lösungsmittel mit geringer Lösungswirkung für OCP, z.B. auf Ester- oder Alkoholbasis enthalten sein.

Ein wesentlicher Grund für die schlechte Löslichkeit liegt bei der OCP-Phase in deren Unverträglichkeit mit der PAMA-Phase, denn das im Trägermedium enthaltene Mineralöl löst beide Phasen etwa gleich gut, was zu einer annähernd gleichmäßigen Verteilung zwischen beiden Phasen führt.

### Aufgabe

Auszugehen war von den Olefincopolymerisaten des Standes der Technik.

Die Lehre der DE-A 29 05 954 stellt eine auf das System OCP/PAMA in Mineralöl zugeschnittene Problemlösung dar, wobei man an die Einhaltung einer Reine von Parametern gebunden war. Man bringt dabei im allgemeinen zunächst das in fester Form vorliegende OCP in Mineralöl in Lösung, dann wird der - meist in situ hergestellte - Emulgator, bestehend aus dem Pfropf- und/oder Blockpolymerisat aus OCP und (Meth)acrylsäureester zugesetzt. Die zur Stabilisierung der Phasen notwendige Menge an Emulgator soll 5 Gew.-%, bezogen auf das Gesamtpolymerisat, nicht unterschreiten. Andererseits setzt ein hoher Anteil an Pfropfpolymerisat als Stabilisator/Emulgator die Wirksamkeit von VI-Verbesserern tendenzmäßig herab.

Es bestand nun die Aufgabe, konzentrierte Emulsionen von Olefincopolymerisaten zur Verfügung zu stellen, die eine wesentlich weitergehende Anwendbarkeit aufweisen als die des Standes der Technik. Auch hinsichtlich der Emulgatoren sollte ein höherer Grad an Flexibilität erreicht werden als bei den bekannten Systemen, wobei die benötigte Menge an Emulgator nach Möglichkeit zu reduzieren war. Weiter waren Vorteile zu erwarten, wenn es gelang, das OCP direkt, d.h. ohne einen zwischengeschalteten Lösungsvorgang in eine konzentrierte Emulsion überzuführen. Die so entstandenen konzentrierten Emulsionen sollen mit Acrylharzen der zur VI-Verbesserung, Stockpunktserniedrigung usw. verwendeten Typen abmischbar sein, vorzugsweise sollen sie mit anderen Schmieröl-Additivkomponenten kompatibel sein.

**Lösung**

Zur Lösung der vorliegenden Aufgabe wird das Verfahren gemäß Anspruch 1 vorgeschlagen.

Im allgemeinen enthalten die erfindungsgemäß hergestellten, konzentrierten OCP-Emulsionen 20 - 65 Gew.-%, vorzugsweise mehr als 30 Gew.-%, an OCP.

Im Unterschied zum Stand der Technik handelt es sich bei dem zu verwendenden Trägermedium nicht um Lösungsmittel bzw. -Kombinationen, die aufgrund der darin gelösten Polyacrylsäure- bzw. -methacrylsäureester als schlechtes Lösungsmittel gegenüber der OCP-Phase wirken, sondern die geringe Löslichkeit resultiert ausschließlich aus den chemisch-physikalischen Eigenschaften des OCP-Polymeren und der Lösungsmittel selbst.

Die erfindungsgemäß wirksamen Emulgatoren entsprechen dem Typ I

A-X I

worin A für ein Segment aus Olefincopolymerisat-Sequenzen, hydrierten Polyisopren-Sequenzen oder hydrierten Copolymeren aus Butadien/Isopren besteht. Die erfindungsgemäß zu verwendenden Olefincopolymerisate entsprechend A sind an sich bekamt. Es handelt sich in erster Linie um aus Äthylen-, Propylen-, Butylen- oder/und weiteren α-Olefinen mit 5 - 20 C-Atomen aufgebaute Polymerisate, wie sie bereits als VI-Verbesserer empfohlen worden sind. Das Molekulargewicht liegt im allgemeinen bei 10 000 bis 300 000, vorzugsweise zwischen 50 000 und 150 000. Derartige Olefincopolymerisate sind beispielsweise in den deutschen Offenlegungsschriften DE-OS 16 44 941, DE-OS 17 69 834, DE-OS 19 39 037, DE-OS 19 63 039 und DE-OS 20 59 981 beschrieben. Sofern A ein Segment aus einem hydrierten Polyisopren darstellt, so sind käufliche Blockcopolymere auf der Basis eines selektiv hydrierten Polyisopren/Polystyrol (z. B. das Handelsprodukt SHELLVIS 50®) bevorzugt.

Besonders gut brauchbar sind Äthylen-Propylen-Copolymere; ebenfalls sind Terpolymere unter Zusatz der bekannten Terkomponenten, wie Äthyliden-Norbornen (vgl. Macromolecular Reviews, Vol. 10, (1975) möglich, es ist jedoch deren Neigung zur Vernetzung beim Alterungsprozeß mit einzukalkulieren. Die Verteilung kann dabei weitgehend statistisch sein, es können aber auch mit Vorteil Sequenz-polymere mit Äthylenblöcken angewendet werden. Das Verhältnis der Monomeren Äthylen-Propylen ist dabei innerhalb gewisser Grenzen variabel, die bei etwa 75 % für Äthylen und etwa 80 % für Propylen als obere Grenze angesetzt werden können. Infolge seiner verminderten Löslichkeitstendenz in Öl ist bereits Polypropylen weniger geeignet als Äthylen-Propylen-Copolymere. Das Segment X in Formel 1 besteht definitionsgemäß aus Polyacrylat- und/oder Polymethacrylat-Sequenzen, welche für sich genommen, z.B. in Form eines entsprechenden Homo- oder Copolymerisats, im Trägermedium Z löslich sind. Das Segment X ist im allgemeinen zu mehr als 50 Gew.-%, vorzugsweise 80 bis 100 Gew.-% (bezogen auf das Segment X) aufgebaut aus Monomeren der Formel II

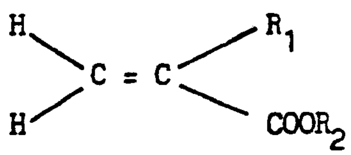

II

worin $R_1$ für Wasserstoff oder Methyl und $R_2$ für einen Alkylrest mit 1 bis 30 Kohlenstoffatomen, vorzugsweise 1 bis 20 Kohlenstoffatomen steht. Im Segment X können ferner enthalten sein:

Monomere der Formel III

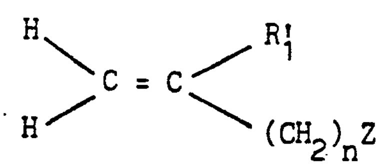

III

worin $R_1'$ für Wasserstoff oder Methyl und Z einen $-COR_3$-Rest, einen 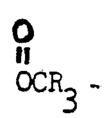 -Rest, einen $-OR_4$-Rest oder ein Chloratom bedeutet und worin $R_3$, $R_4$ für einen gegebenenfalls verzweigten Alkylrest mit 1 bis 20 Kohlenstoffatomen oder für einen Phenylrest und n für 0 oder 1 steht, und/oder Monomeren

der Formel IV

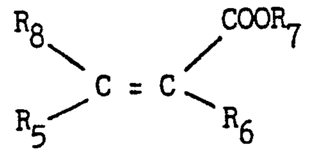

IV

worin $R_5$ und $R_8$ Wasserstoff oder einen Rest - $COOR_7'$, $R_6$, Wasserstoff oder einen Rest $-CH_2COOR_7''$ bedeuten mit der Maßgabe, daß die Verbindung der Formel III zwei Estergruppen enthalten muß und worin $R_7$, $R_7'$ und $R_7''$ für einen gegebenenfalls verzweigten Alkylrest mit 1 bis 20 Kohlenstoffatomen stehen. Das Segment X kann gegebenenfalls noch Anteile der Monomeren der Formel V enthalten

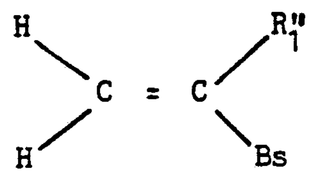

V

worin $R_1''$ die Bedeutung von $R_1$ besitzt und Bs für einen stickstoffhaltigen funktionellen Rest wie eine $-C{\equiv}N$ Gruppe, eine Gruppe $-CONR_9R_{10}$, worin $R_9$ und $R_{10}$ für Wasserstoff oder einen Alkylrest mit 1 bis 20 Kohlenstoffatomen steht, oder worin $R_9$ und $R_{10}$ unter Einbeziehung des Stickstoffs einen heterocyclischen 5- oder 6-Ring bilden oder worin Bs für einen (inerten) heterocyclischen Rest, insbesondere einen Pyridin-, Pyrolidin-, Imidazol-, Carbazol-, Lactam-Rest bzw. alkylierten Derivaten derselben steht oder Bs die Bedeutung $-CH_2OH$ besitzt, oder worin Bs die Bedeutung

$-COO-Q-R_{11}$

besitzt, worin Q für einen, gegebenenfalls alkylsubstituierten Alkylenrest mit 2 bis 8 Kohlenstoffatomen und $R_{11}$ für -OH, für $-OR_7'''$ oder für einen Rest $-NR_9'R_{10}'$ steht, wobei $R_7'''$, $R_9'$ und $R_{10}'$ die gleichen Bedeutungen wie $R_7$, $R_9$ und $R_{10}$ besitzen, z.B. zusammen mit dem Stickstoffatom, gegebenenfalls unter Einbeziehung eines weiteren Heteroatoms einen fünf- bis sechsgliedrigen heterocyclischen Ring bilden.

Als Beispiele für Monomeren der Formel III und IV seien besonders genannt Styrol, α-Methylstyrol, Vinylchlorid, Vinylacetat, Vinylstearat, Vinylmethylketon, Vinylisobutyläther, Allylacetat, Allylchlorid, Allylisobutyläther, Allylmethylketon, Dibutylmaleinat, Dilaurylmaleinat, Dibutylitaconat.

Der Anteil der Monomeren der Formeln III - V am Segment X liegt im allgemeinen zwischen 0 und 50 Gew.-%, vorzugsweise bei 0 bis 20 Gew.-%, (bezogen auf die Monomeren des Segments X). Der Anteil der Monomeren der Formel V am Segment X wird im allgemeinen 20 Gew.-% nicht überschreiten, in der Regel liegt er bei 0 bis 10 Gew.-%, vorzugsweise 0 bis 5 Gw.-%.

Im einzelnen wird das Segment X nach Anteil und Zusammensetzung zweckmäßigerweise im Hinblick auf die gewüschte, technische Funktion gewählt werden. So wird das Segment X wie auch das Segment A bestimmte Voraussetzungen erfüllen müssen, um optimale Eignung als Viskositätsindex-Verbesserer bei Mineralölen zu besitzen. Die Stabilität der Emulsion ist besonders gut, wenn das Molgewicht des Segments A mindestens gleich dem Molgewicht des zu emulgierenden OCP und das Molgewicht des Einzelsegments X größer 20 000 ist.

Im vorliegenden Falle soll die Forderung erfüllt sein, daß auch das Segment X ausreichende Löslichkeit in Mineralölen besitzt. Der Anteil der polaren Monomeren der Formel V, wird in diesem Falle 20 Gew.-% nicht überschreiten, vorzugsweise liegt er bei 0 bis 10 Gew.-% (bezogen auf die Monomeren des Segments X), besonders bevorzugt bei 0 bis 5 Gew.-%. Als Monomeren der Formel V seien C- und N-Vinylpyridin sowie Vinylpyrrolidin, Vinylpyrrolidon, Vinylcarbazol, Vinylimidazol, insbesondere die N-Vinylverbindungen genannt, ebenso die Hydroxy- und Dialkylaminoalkylester der Acryl- bzw. der Methacrylsäure, speziell Dimethylaminoäthyl(meth)acrylat, Dimethylaminopropyl (meth)acrylat, Hydroxyäthyl(meth)acrylat.

Die Segmente A und X in Formel I stehen im allgemeinen im Gewichtsverhältnis 1: 20 bis 20: 1, vorzugsweise 1: 4 bis 1: 1.

Im allgemeinen enthalten die erfindungsgemäßen konzentrierten OCP-Emulsionen den Emulgator AX in Konzentrationen von 1 bis 50 Gew.-%, vorzugsweise 5 bis 15 Gew.-%. Falls die erfindungsgemäßen konzentrierten Emulsionen für andere Anwendungszwecke vorgesehen sind als VI-Verbesserer, kann das Segment X in entsprechender Weise an die vorgesehene Verwendung angepaßt sein.

**Herstellung der Emulgatoren**

Der Emulgator wird in der Regel in einer gesonderten Stufe vorab hergestellt. Die Verfahren zur Herstellung geeigneter Emulgatoren vom Typ A - X sind an sich bekannt. So kann z.B. nach der Methode der Übertragungspfropfung vorgegangen werden: (Vgl. auch Houben-Weyl, Methoden der Org. Chemie, Bd. 14/1, S. 114, H.A.J. Battaerd, G.W. Tregear, Polymer Reviews, Vol. 16, Unterscience (1967)).

Dazu stellt man eine 10 - 20 %ige Lösung eines OCP in einem geeigneten, unter Polymerisationsbedingungen inerten Lösungsmittel her. Vorteilhafterweise verwendet man ein Lösungsmittelsystem, in dem gelöst der Emulgator beim vorliegenden Verfahren dem Trägermedium ohne weiteres zugefügt werden kann. Dies erfordert einen Siedepunkt, der oberhalb der Verfahrenstemperatur liegt. Als Lösungsmittel kommen z. B. Butylacetat, Trimethyladipinsäureoctylester, Pentaerythrittetraadipinsäureester u.ä. in Frage. Zu diesen Lösungen gibt man die Monomeren der Formel II bis V in den angegebenen Verhältnissen und polymerisiert unter Zusatz eines oder mehrerer, vorzugsweise peroxidischer Radikal-Initiatoren bei Temperaturen von 60 - 150° C innerhalb von gewöhnlich 4 - 8 Stunden. Anzustreben ist ein möglichst vollstädiger Umsatz. Vorzugsweise finden Perester wie tert.-Butylperoctoat Verwendung. Die Intiatorkonzentration richtet sich nach der Zahl der gewünschten Pfropfstellen und dem gewünschten Molekulargewicht des Segments X. Im allgemeinen liegt die Intiatorkonzentration zwischen 0,2 und 3 Gew.-%, bezogen auf das Polymerisat. Gegebenenfalls können zur Einstellung des gewünschten Molekulargewichts der Segmente X noch Regler mitverwendet werden. Als Regler eignen sich z.B. Schwefelregler, insbesondere mercaptogruppenhaltige Regler, z.B. Dodecylmercaptan. Die Konzentrationen an Reglen liegen im allgemeinen bei 0, 1 bis 1,0 Gew.-%, bezogen auf das Gesamtpolymerisat. Eine weitere Methode zur Herstellung der Emulgatoren der Formel I stellt die Hydroperoxidation eines CCP als ersten Schritt dar. Die auf diese Weise gebildeten, kettenstädigen Hydroperoxidgruppen können in einer folgenden Stufe die Pfropfpolymerisation der Vinylmonomeren initiieren. (Vgl. H.A.J. Battaerd, G.W. Tregear, Polymer Reviews loc.cit.).

Ein Verfahren zur Herstellung von geeigneten Blockpolymerisaten besteht z.B. in der anionischen Polymerisation. Dabei kann man beispielsweise so vorgehen, daß man Isopren bzw. Butadien mit einem geeigneten anionischen Intiator (z.B. metallorganische Verbindung) polymerisiert und die "lebenden" anionischen Kettenenden mit z.B. Alkylmethacrylat umsetzt. Die so hergestellten Polymerisate werden anschließend unter Bedingungen hydriert, unter denen die vorhandenen funktionellen Gruppen nicht angegriffen werden. Bezüglich Einzelheiten der Herstellung sei auf die einschlägige Literatur verwiesen, z.B. Houben-Weyl, Methoden der Org. Chemie, 14/1, S. 110ff.; Block Copolymers, D. C. Allport, W. H. Janes, Appl. Sci. Publishers Ltd., London, 1973; Graft Copolymers, H. A. J. Battaerd, G.W. Tregear, Polymer Reviews Vol. 16 (1967); Block and Graft Polymers, W.J. Burlant, A.S. Hoffmam, Reinhold Publishers Corp., New York, 1960.

**Trägemedium T**

Als flüssiges Trägemedium wird definitionsgemäß ein solches verwendet, das die Olefincopolymerisate im Temperaturbereich zwischen 40 und 150° C zu einem Grad von 5 - 300 Gew.-% anquellen läßt ("Quellungsgrad"). Der "Quellungsgrad" ist dabei wie folgt definiert: Ein OCP-Film von 1 mm Dicke, 2 cm Länge und 0,5 cm Breite bekannten Gewichts, wird bei einer definierten Temperatur (s.unten) - im beispielhaft belegten Falle bei 90° C - eingetaucht und 24 Stunden lang isotherm gelagert, mit der Pinzette der Lösung entnommen, mit einem Filterpapier vom anhaftenden Quellungsmittel befreit und unmittelbar anschließend ausgewogen. Als Maß der Quellung wird die Gewichtszunahme in Prozent - bezogen auf das Ausgangsgewicht - definiert. Die Quellungsmessung soll bei der Temperatur, bei der die konzentrierte OCP-Emulsion hergestellt werden soll, durchgeführt werden. Erfindungsgemäß soll bei dieser Temperatur die Quellung 5 -300 % betragen. Voraussetzung für die Anwendbarkeit des Kriteriums ist, daß unter den vorstehend angegebenen Bedingungen die maximale Quellung des OCP erreicht ist.

Die erfindungsgemäß als flüssiges Trägermedium verwendbaren Lösungsmitteln sollen inert und im ganzen unbedenklich sein. Trägermedien, die die genannten Bedingungen erfüllen, gehören z. B. zur Gruppe der Ester und/oder zur Gruppe der höheren Alkohole. In der Regel enthalten die Moleküle der als Trägermedium in Frage kommenden Verbindungstypen mehr als 8 Kohlenstoffatome pro Molekül.

Hervorzuheben sind in der Gruppe der Ester: Phosphorsäureester, Ester von Dicarbonsäuren, Ester von Monocarbonsäuren mit Diolen oder Polyakylenglykolen, Ester von Neopentylpolyolen mit Monocarbonsäuren. (Vgl. Ullmanns Encyclopädie der Technischen Chemie, 3. Aufl., Bd. 15, S. 287-292, Urban & Schwarzenberg (1964)). Als Ester von Dicarbonsäuren kommen einmal die Ester der Phthalsäure in Frage, insbesondere die Phthalsäureester mit $C_4$ bis $C_8$-Alkoholen, wobei Dibutylphthalat und Dioctylphthalat besonders genannt seien, sodann die Ester aliphatischer Dicarbonsäuren, insbesondere die Ester geradkettiger Dicarbonsäuren mit verzweigtkettigen primären Alkoholen. Besonders hervorgehoben werden die Ester der Sebazin-, der Adipin- und der Azelainsäure, wobei insbesondere die 2-Äthylhexyl-, Isooctyl-3,5,5-Trimethyl-ester, sowie die Ester mit den $C_8$-, $C_9$- bzw. $C_{10}$-Oxoalkoholen genannt werden sollen.

Besondere Bedeutung besitzen die Ester geradkettiger primärer Alkohole mit verzweigten Dicarbonsäuren. Als Beispiele seien die alkylsubstituierte Adipinsäure, beispielsweise die 2,2,4-Trimethyladipinsäure genannt.

Als Alkoholkomponente kommen mit Vorteil z.B. die vorstehend genannten Oxo-Alkohole in Frage. Als Ester

von Monocarbonsäuren mit Diolen oder Polyalkylenglykolen seien die Di-Ester mit Diäthylenglykol, Triäthylenglykol, Tetraäthylenglykol bis zum Dekamethylenglykol, ferner mit Dipropylenglykol als Alkoholkomponenten hervorgehoben. Als Monocarbonsäuren seien die Propionsäure, die (Iso)buttersäure sowie die Pelargonsäure spezifisch erwähnt - genannt sei beispielsweise das Dipropylenglykoldipelargonat, das Diäthylenglykoldipropionat - und Diisobutyrat sowie die entsprechenden Ester des Triäthylenglykols, sowie der Tetraäthylenglykol-di-2-Äthylhexansäureester.

Es sei erwähnt, daß auch Gemische aus den vorstehend beschriebenen Lösungsmitteln für das Trägermedium in Frage kommen. Der Anteil des Trägermediums an der konzentrierten Polymerisatemulsion beträgt in der Regel 79 bis 25 Gew.-%, vorzugsweise unter 70, speziell 60 bis 40 Gew.-%.

**Gewerbliche Verwertbarkeit**

Die erfindungsgemäßen konzentrierten Emulsionen von Olefincopolymeren in einem Trägermedium können mit weiteren Monomeren, wie z.B. den bei der Herstellung der Emulgatoren unter den Formeln II, III, IV und V definierten Monomeren gepfropft werden.

Besonders genannt seien z.B. Styrol, α-Methylstyrol, Vinylester wie Vinylacetat, Ester der Acryl- und/oder Methacrylsäure mit $C_1$ - $C_{30}$-Alkoholen, letztere speziell im Hinblick auf die Anwendung als VI-Verbesserer. Besonders wichtig ist in diesem Zusammenhang auch die Pfropfung mit den polaren Monomeren der Formel V, speziell mit N-Vinylpyrrolidon, N-Vinylimidazol, N-Vinylpyridin, N-Vinylcarbazol, 2-Dimethylaminoethylmethacrylat. Man erreicht dabei neben einer Verbesserung der Stabilität noch zusätzliche erwünschte Eigenschaften, wie stockpunktverbessernde sowie Dispergier-/ Detergent-Wirkung. Weiterhin können die OCP-Dispersionen mit dem Polymertyp der dem löslichen Emulgatoranteil (X in AX) entspricht, abgemischt werden, wobei diese Polymeren dann in die kontinuierliche Phase gehen. Die bevorzugte Anwendung finden die erfindungsgemäßen konzentrierten OCP-Emulsionen auf dem Gebiet der VI-Verbesserer, jedoch bietet sich ihre Verwendung auch auf weiteren Gebieten der Technik an. Konzentrierte, dispergierwirksame OCP-Dispersionen mit Stockpunktwirkung gab es bisher auf dem Markte nicht, sondern lediglich verdünnte Lösungen (maximal 15 %ig) der Olefincopolymerisate in Mineralöl.

Die erfindungsgemäßen, konzentrierten OCP-Emulsionen sind besonders interessant, wenn sie mit den Monomeren der Formel V gepfropft worden sind. In dieser Form stellen sie dem Stand der Technik überlegene Öladditive mit Dispergier-, Detergenz- und Stockpunktwirkung dar. Verglichen mit Olefinpfropfpolymerisaten, die in Lösung erzeugt worden sind, kann man erfindungsgemäß höhere Pfropfausbeuten erzielen. Der Pfropfschritt kann z.B. ohne den bisher üblichen, sachlich bedingten Aufwand durchgeführt werden, indem mann analog der Pfropfung in Lösung arbeitet. (Vgl. Houben-Weyl, loc.cit.).

**Beispiele**

**I. Herstellung der Emulgatoren vom Typ AX**

Herstellung eines Emulgators AX1

In einem 1 l-Vierhalskolben mit Rührer, Thermometer, Rückflußkühler und Dosierleitung wird folgende Mischung vorgelegt:

280 g Pentaerythrit-tetra-caprinsäureester

84 g Äthylen-Propylencopolymerisat (50 % Äthylen; $\bar{M}w = 80\,000$; $U = 0{,}8$)

40,4 g Methacrylsäureester eines $C_{12}$-$C_{18}$-Alkoholgemisches

Nach Lösen unter Stickstoffatmosphäre bei 95° C werden 4 g tert.-Butylperoctoat zugegeben. Dann wird über einen Zeitraum von 3,5 Stunden ein Gemisch aus

236,5 g Methacrylsäureester eines $C_{12}$-$C_{18}$-Alkoholgemisches

59, 1 g Methacrylsäuremethylester

11,8 g tert.-Butylperoctoat gleichmäßig zudosiert.

2 Stunden nach Zulaufende wird mit 0,84 g tert.-Butylperoctoat nachgefüttert.

Gesamtpolymerisationszeit 8 Stunden. Man erhält eine klare, viskose Lösung. Polymerisatgehalt: 60 Gew.-%. Viskosität bei 100° C: 1 200 $mm^2/s$

Viskosität (3 %ig in Mieralöl $\eta_{100°C} = 5{,}3\ mm^2/s$): 100° C: 7,06 $mm^2/s$

40° C: 42,00 $mm^2/s$

$VI_B$: 128

***) SSI - Scherstabilitätsindex - Verlust an Verdickungswirkung in % bei Scherstabilitätsprüfung nach DIN 51382

**Herstellung eines Emulgators AX2**

In einem 1 l Witt'schen Topf mit Inter-Mig-Rührer (Rührer/Behälterdurchmesserverhältnis = 0,7), Thermometer, Rückflußkühler, werden 84 g Äthylen-Propylencopolymerisat (50 % Äthylen, $\bar{M}w$ = 80 000, U = 0,8) in 280 g Butylacetat bei 100°C gelöst. Nach dem Lösen werden 40,4 g einer Mischung aus 70 % Methacrylsäuremethylester und 30 % Acrylsäurebutylester unter Stickstoffatmosphäre zugegeben. Bei 100°C wird 1 g tert.-Butylperoctoat zugesetzt und in einem Zeitraum von 3,5 Stunden ein Gemisch aus

207,5 g Methacrylsäuremethylester
88,8 g Acrylsäurebutylester
3 g tert.-Butylperoctoat

gleichmäßig zudosiert. Zwei Stunden nach Zulaufende wird mit 0,7 g tert.-Butylperoctoat nachgefüttert. Gesamtpolymerisationszeit: 8 Stunden.

Man erhält eine trübe, viskose Lösung. Polymerisatgehalt: 60 Gew.-%.

## II. Herstellung der Emulsionen

### Beispiel 1

Trägermedium: Dibutylphthalat
OCP-Quellung: 20 % bei 90°C
Emulgator: AX1

In einem 1 l Witt'schen Topf mit Inter-Mig-Rührer (Verhältnis Rührer/Behälterdurchmesser = 0,7, 2 Strombrecher, Rührerdrehzahl ca. 450 Upm) werden 342 g Dibutylphthalat und 37,5 g Emulgator AX1 vorgelegt. Dann werden unter Rühren bei 110°C unter $N_2$-Atmosphäre 370,5 g granuliertes OCP (1/1-Gemisch aus Äthylen/Propylen-Copolymerisat mit 70 % bzw. 50 % Äthylen beide thermischoxidativ abgebaut von $\bar{M}w \approx$ 150 000 auf $\bar{M}w \approx$ 100 000) portionsweise zugegeben. Dispergierzeit 4 - 5 Stunden. Danach gibt man 26,8 g 2-Dimethylaminoäthylmethacrylat zu und pfropft bei 100°C unter Zusatz von 1 g tert.-Butylperoctoat. Jeweils nach 1 Stunde wird zweimal mit je 0,5 g tert.-Butylperoctoat nachgefüttert. Dann gibt man ein Gemish aus 116 g Methacrylsäureester eines $C_{12}$-$C_{18}$-Alkoholgemisches und 81,3 g Dibutylphthalat zu und polymerisiert wiederum bei 100°C unter Zusatz von 1,3 g tert.-Butylperoctoat. Jeweils nach 1 Stunde wird mit 0,67 g tert. -Butylperoctoat zweimal nachgefüttert.

Man erhält eine trübe, viskose Emulsion. Im Phasenkontrastmikroskop sind runde OCP-Teilchen mit 1 - 10 µm Durchmesser zu erkennen.

Polymerisatgehalt: 55 Gew. -%
Viskosität bei 5 $s^{-1}$ Schergefälle:
25°C: 4 300 $mm^2/s$
40°C: 1 750 $mm^2/s$
60°C: 1 000 $mm^2/s$
100°C: 1 250 $mm^2/s$
N-Gehalt im isolierten Polymerisat: 0,23 Gew.-%.
Viskosität (2,6 %ig in Mineralöl mit $\eta_{100°C}$ = 5,3 $mm^2/s$):
100°C: 14,83 $mm^2/s$
40°C: 102,20 $mm^2/s$
$VI_B$: 154
SSI***) (2,6 %ig in Mineralöl mit $\eta_{100°C}$ = 5,3 $mm^2/s$):44 Stockpunkt (2,6 %ig in Mineralöl mit $\eta_{100°C}$ = 5,3 $mm^2/s$): -34°C
Asphaltentest bei
0,025/ 0,05/ 0,075/ 0,1/ 0,125/ 0,15 % Additivzusatz
- + + + + +

***) SSI = Scherstabilitätsindex = Verlust an Verdickungswirkung in % bei Scherstabilitätsprüfung) nach DIN 51382

### Beispiel 2

Trägermedium: t-Amylalkohol
OCP-Quellung: 92 % bei 90°C
Emulgator: AX1

In einem 1 l Witt'schen Topf mit Inter-Mig-Rührer (Verhältnis Rührer/Behälterdurchmesser = 0,7, 2 Strombrecher, Rührerdrehzahl ca. 450 Upm) werden 70 g Emulgator AX1 und 200 g t-Amylalkohol bei 90°C vorgelegt. Unter Rühren werden portionsweise 250 g granuliertes OCP (Äthylen/Propylencopolymerisat mit 70 % Äthylen thermisch-oxidativ von $\bar{M}w \approx$ 150 000 auf $\bar{M}w \approx$ 100 000 abgebaut) zugegeben. Dispergierzeit 4 - 5

Stunden. Man erhält eine weiße Emulsion. Im Phasenkontrastmikroskop erkennt man runde OCP-Teilchen mit 1-5 µm Durchmesser.

Polymerisatgehalt: 56,2 %.

Viskosität (25° C / Schergefälle $5s^{-1}$): 4 660 mPas

Viskosität (40° C / Schergefälle $5s^{-1}$): 12 200 mPas

**Beispiel 3**

Trägermedium: Propylacetat

OCP: wie in Beispiel 2

OCP-Quellung: 65 % bei 90° C

Emulgator: AX1

Apparatur wie in Beispiel 2.

Temperatur: 80 ° C

50 g Emulgator AX1 werden mit 340 g Propylacetat vorgelegt und unter Rühren portionsweise 255 g granuliertes OCP zugegeben. Man erhält eine weiße, niedrigviskose Emulsion mit OCP-Teilchendurchmessern von 1-10 µm.

Viskosität (25° C / Schergefälle $5s^{-1}$): 30 mPas

Viskosität (40° C / Schergefälle $5s^{-1}$): 76 mPas

**Beispiel 4**

Trägermedium: Äthylenglykolacetat

OCP-Quellung: 23 % bei 90° C

Emulgator: AX2

Apparatur wie in Beispiel 2.

Temperatur: 110° C

Es werden 70 g Emulgator AX2, 72 g Butylacetat und 200 g Äthylenglykolacetat in dem Witt'schen Topf vorgelegt. Unter Stickstoffatmosphäre werden portionsweise 330 g granuliertes OCP zugegeben. Dispergierzeit ca. 4 - 5 Stunden.

Men erhält eine weiße Emulsion mit runden OCP-Teilchen von 1 - 5 µm Durchmesser.

Polymerisatgehalt: 55,4%

Viskosität (25° C / Schergefälle $5s^{-1}$): 706 mPas

Viskosität (40° C / Schergefälle $5s^{-1}$): 1720 mPas

**Beispiel 5**

Trägermedium: Hexamethylphoshporsäuretriamid

OCP-Quellung: 21 % bei 90° C

Emulgator: AX2

OCP wie in Beispiel 2

Apparatur wie in Beispiel 2

Temperatur: 110° C

110 g Emulgator AX2 und 180 g Hexamethylphosphorsäuretriamid werden im Witt'schen Topf vorgelegt und 260 g granuliertes OCP portionsweise zugegeben. Dispergierzeit 4 - 5 Stunden.

Men erhält eine graue Emulsion. Teilchendurchmesser des dispergierten OCP 1 - 5 µm.

Polymerisatgehalt: 59,3 Gew.-%

Viskosität (25° C / Schergefälle $5s^{-1}$): 4460 mPas

Viskosität (40° C / Schergefälle $5s^{-1}$): 4320 mPas

**Patentansprüche**

1. Verfahren zur Herstellung von konzentrierten Emulsionen von Olefincopolymerisaten in zur Anwendung in Öladditiven geeigneten Trägermedien, ohne vorausgehendes Auflösen der Olefincopolymerisate,

dadurch gekennzeichnet,

daß man die Lösung eines Emulgators des Typs I

A-X I

worin A für Olefincopolymerisat-Sequenzen, hydrierten Polyisopren-Sequenzen oder hydrierten Copolymeren aus Butadien/Isopren, und X aus Polyacrylat und/oder Polymethacrylat aufgebaute Sequenzen bedeutet, in einem Trägermedium T herstellt, welches die Olefincopolymerisate im wesentlichen nicht löst, die Sequenzen X jedoch löst und im Temperaturbereich zwischen 40 und 150° C unter Anwendung von Scherkräften die Olefincopolymerisate in der Lösung des Emulgators im Trägermedium T emulgiert.

2. Verfahren gemäß Anspruch 1, dadurch gekennzeichnet, daß das Trägermedium die Olefincopolymerisate im Temperaturbereich zwischen 40 und 150° C bis zu einem Grad von 5 - 300 Gew.-% anquellen läßt.

3. Verfahren gemäß den Ansprüchen 1 und 2, dadurch gekennzeichnet, daß der Anteil der Olefincopolymerisate an der Emulsion 20 bis 65 Gew.-%, vorzugsweise 30 bis 50 Gew.-%, beträgt.

4. Verfahren gemäß den Ansprüchen 1 bis 3, dadurch gekennzeichnet, daß der Anteil der Emulgatoren der allgemeinen Formel I an der Emulsion 1 bis 30 Gew.-%, vorzugsweise 5 bis 15 Gew. -%, beträgt.

5. Verfahren gemäß den Ansprüchen 1 bis 4, dadurch gekennzeichnet, daß die Sequenzen A und X in den Emulgatoren der allgemeinen Formel I im Gewichtsverhältnis 1: 20 bis 20: 1 stehen.

6. Verfahren zur Herstellung von konzentrierten Emulsionen von Olefincopolymerisaten mit Dispergier-, Detergenz - und Stockpunktswirkung, dadurch gekennzeichnet, daß auf die nach den Ansprüchen 1 bis 5 hergestellten OCP-Emulsionen weitere Monomere mit einem stickstoffhaltigen, funktionellen Rest, insbesondere Verbindungen der Formel V pfropfend auf polymerisiert werden.

## Claims

1. Process for preparing concentrated emulsions of olefin copolymers in carrier media suitable for use in oil additives, without any preliminary dissolving of the olefin copolymers, characterised in that the solution of an emulsifier of type I

A - X

wherein A represents olefin copolymer sequences, hydrogenated polyisoprene sequences or hydrogenated copolymers of butadiene/isoprene, and X represents sequences synthesised from polyacrylate and/or polymethacrylate,

is prepared in a carrier medium T which largely does not dissolve the olefin copolymers but does dissolve the sequences X and the olefin copolymers are emulsified in the solution of the emulsifier in the carrier medium T in a temperature range of between 40 and 150° with the application of shearing forces.

2. Process as claimed in claim 1, characterised in that the carrier medium allows the olefin copolymers to swell to a degree of from 5 to 300% by weight in a temperature range of between 40 and 150°.

3. Process as claimed in claims 1 and 2, characterised in that the proportion of olefin copolymers in the emulsion is 20 to 65% by weight, preferably 30 to 50% by weight.

4. Process as claimed in claims 1 to 3, characterised in that the proportion of emulsifiers of general formula 1 in the emulsion is from 1 to 30% by weight, preferably 5 to 15% by weight.

5. Process as claimed in claims 1 to 4, characterised in that the sequences A and X in the emulsifiers of general formula I are in a ratio by weight of from 1:20 to 20:1.

6. Process for preparing concentrated emulsions of olefin copolymers with a dispersant and detergent effect and an effect on the solidifying point, characterised in that other monomers with a nitrogencontaining functional group, more particularly compounds of formula V, are graft-polymerised onto the OCP emulsions prepared according to claims 1 to 5.

## Revendications

1. Procédé pour la préparation d'émulsions concentrées de copolymères d'oléfines dans des véhicules appropriés pour une utilisation dans des additifs pour huiles, sans dissolution préalable des copolymères d'oléfines, caractérisé en ce qu'on prépare la solution d'un émulsifiant du type I

A - X (I)

dans lequel A représente des séquences de copolymère d'oléfines, des séquences de polyisoprène hydrogéné ou des copolymères hydrogénés de butadiène/isoprène et X représente des séquences composées de polyacrylate et/ou de polyméthacrylate, dans un vehicule T qui ne dissout pratiquement pas les copolymères d'oléfines, mais dissout les séquences X et, dans la gamme de température comprise entre 40 et 150° C, on émulsionne les copolymères d'oléfines dans la solution de l'émulsifiant dans le vehicule T avec application de forces de cisaillement.

2. Procédé selon la revendication 1, caractérisé en ce que le véhicule fait gonfler les copolymères d'oléfines, dans la gamme de température comprise entre 40 et 150° C, jusqu'à un degré de 5 à 300% en poids.

3. Procédé selon la revendication 1 ou 2, caractérisé en ce que la part des copolymères d'oléfines dans l'émulsion est comprise entre 20 et 65 % en poids, de préférence entre 30 et 50 % en poids.

4. Procédé selon l'une quelconque des revendications 1 à 3, caractérisé en ce que la part des émulsifiants de formule générale I dans l'émulsion est comprise entre 1 et 30 % en poids, de préférence entre 5 et 15 % en poids.

5. Procédé selon l'une quelconque des revendications 1 à 4, caractérisé en ce que les séquences A et X dans les émulsifiants de formule générale I sont dans un rapport pondéral compris entre 1: 20 et 20: 1.

6. Procédé pour la préparation d'émulsions concentrées de copolymères d'oléfines à effet dispersant, détergent et agissant sur le point d'écoulement, caractérisé en ce qu'il est greffé par polymérisation ultérieure, sur les émulsions d'OCP préparées suivant l'une quelconque des revendications 1 à 5, d'autres monomères comportant un radical fonctionnel azoté, en particulier des composés de formule V.